# EUROPÄISCHE PATENTANMELDUNG

(11) **EP 0 869 250 A2**
(43) Veröffentlichungstag der Anmeldung: **07.10.1998**
(21) Anmeldenummer: 98104886.1
(22) Anmeldetag: 18.03.1998
(51) Int. Cl.: E05F 15/00, E05F 15/16, H01H 13/14

(54) **Vorrichtung zur Einklemmerkennung bei einem kraftbetätigten Schliesselement**

(30) Priorität: 04.04.1997 LU 90046
(71) Anmelder: I.E.E. International Electronics & Engineering S.à.r.l., L-2632 Luxembourg (LU)
(72) Erfinder: Lehnen, Hans Günter, 66687 Wadern-Noswendel (DE); Lorig, Roland, 54675 Sinspelt (DE); Schmitt, Stefan, 54393 Trier (DE)
(74) Vertreter: Freylinger, Ernest T.

(57) **Zusammenfassung**

Es wird eine Vorrichtung zur Einklemmerkennung bei einem kraftbetätigten Schließelement (4) vorgeschlagen, mit einem Schaltelement (24) das entlang einer ersten Schließkante angeordnet ist und mit mindestens zwei sich längs erstreckenden Kraftübertragern (16), die das Schließelement (4) in Schließstellung seitlich flankieren und die im Einklemmfall eine Einklemmkraft auf das Schaltelement (24) übertragen. Das Schaltelement (24) ist als Schaltelement in Folienbauweise ausgebildet mit zwei Trägerfolien (36), die in einem bestimmten Abstand übereinander angeordnet sind. Auf den Trägerfolien (36) sind mindestens zwei Kontaktelemente (40) derart angeordnet, daß zwei längs verlaufende aktive Bereiche (26) ausgebildet werden die durch einen längs verlaufenden Abstandhalter (42) voneinander getrennt sind, wobei jeder aktive Bereich (26) in dem Wirkungsbereich jeweils eines Kraftübertragers (16) angeordnet ist.

## Beschreibung

Die vorliegende Erfindung betrifft eine Vorrichtung zur Einklemmerkennung bei einem kraftbetätigten Schließelement. Derartige Vorrichtungen werden eingesetzt, um im Falle einer Einklemmung, zum Beispiel eines Körperteiles zwischen zwei sich gegenüberliegenden Schließkanten, die Antriebseinheit des Schließelementes abzuschalten und gegebenenfalls die Bewegung des Schließelementes umzukehren. Zum Einsatz kommen diese Einklemmsicherungen zum Beispiel bei elektrisch betätigten Fensterhebern und Schiebedächern, bei automatischen Fahrzeugtüren, z.B. in Bussen und Bahnen, aber auch in Fahrstuhltüren o.ä.

Die LU-A-87 942 beschreibt zum Beispiel eine Einklemmsicherung, bei der ein Schaltelement, z.B. eine Foliendrucksensor, an der Schließkante des Schließelementes angebracht wird. Befindet sich ein Hindernis in der Bewegungsbahn des Schließelementes wird der Foliendrucksensor beim Auftreffen des Hindernisses durch eine direkte Druckbeaufschlagung ausgelöst und die Antriebssteuerung des Schließelementes kehrt die Bewegungsrichtung des Schließelementes um. Diese Vorrichtung zeichnet sich durch eine sehr hohe Ansprechwahrscheinlichkeit aus, jedoch entstehen Probleme bei geschlossenem Schließelement. Die Abdichtung des Schließelementes gegen eine Schließkante erfolgt bei dieser Vorrichtung auf Stoß, das heißt die sich gegenüberliegenden Flächen des Schaltelementes und der Schließkante werden zum Abdichten gegeneinander gedrückt. Hierdurch ist das Schaltelement bei geschlossenem Schließelement einer unzulässigen Dauerbelastung ausgesetzt, die nach kurzer Zeit zu seiner Zerstörung führt.

Die DE-PS-195 02 033 beschreibt einen Einklemmschutz für ein Schließelement in einem Kraftfahrzeug, mit einem elastischen U-förmigen Dichtprofil, dessen Schenkel das Schließelement in geschlossenem Zustand seitlich flankieren. Bei einem Einklemmfall leiten die verstärkten Schenke des Dichtprofils die Einklemmkraft auf zwei längs verlaufende Kontaktstreifenpaare, die in einer Hohlkammer im Boden des Dichtprofiles derart angeordnet sind, daß sie jeweils in dem unmittelbaren Wirkungsbereich eines Schenkels liegen. Zwischen den beiden Kontaktstreifenpaaren ist in der Hohlkammer ein längs verlaufender Abstandhalter in dem Bereich der Anlauffläche der Fensterscheibe angeordnet, der ein ungewolltes Auslösen der Schutzvorrichtung beim Schließvorgang der Scheibe verhindert, so daß eine Dauerbelastung der Kontaktstreifenpaare vermieden wird. Der Nachteil dieser Vorrichtung liegt in dem hohen Herstellungsaufwand, da zwei Kontaktstreifenpaare und ein Abstandhalter in die enge Hohlkammer des Dichtungsprofils eingebracht und dort derart positioniert werden müssen, daß sie gegen Verschieben gesichert sind.

Aufgabe der vorliegenden Erfindung ist es folglich, eine Vorrichtung zur Einklemmerkennung bei einem kraftbetätigten Schließelement vorzuschlagen, die eine unzulässige Belastung des Schaltelementes in Schließposition des Schließelementes verhindert und sich überdies durch einen geringen Herstellungsaufwand auszeichnet.

Diese Aufgabe wird erfindungsgemäß gelöst durch eine Vorrichtung zur Einklemmerkennung bei einem kraftbetätigten Schließelement, mit einem Schaltelement das entlang einer ersten Schließkante angeordnet ist und mit mindestens zwei sich längs erstreckenden Kraftübertragern, die das Schließelement in Schließstellung seitlich flankieren und die im Einklemmfall eine Einklemmkraft auf das Schaltelement übertragen. Das Schaltelement ist als Schaltelement in Folienbauweise ausgebildet, mit zwei Trägerfolien, die bevorzugt mittels seitlichen Abstandhaltern in einem bestimmten Abstand übereinander angeordnet sind, wobei sich die Abstandhalter entlang der Längsseiten der Trägerfolien erstrecken. Auf den Trägerfolien sind mindestens zwei Kontaktelemente derart angeordnet, daß zwei aktive Bereiche ausgebildet sind die durch einen längs verlaufenden Abstandhalter voneinander getrennt sind, wobei jeder aktive Bereich in dem Wirkungsbereich jeweils eines Kraftübertragers angeordnet ist.

Die vorgeschlagene Schutzvorrichtung zeichnet sich durch einen sehr geringen Herstellungsaufwand aus, da beim Zusammenbau das Schaltelement in Folienbauweise in einem Arbeitsgang bezüglich der Kraftübertrager positioniert werden kann, z.B. durch Einfädeln in eine enge Hohlkammer eines U-förmigen Hohlkammerprofiles, wobei die Schenke des U-förmigen Hohlkammerprofils als Kraftübertrager ausgebildet sind. Die Positionierung des Schaltelementes in der Hohlkammer kann dabei vorteilhaft dadurch erleichtert werden, daß die Innenabmessungen der Hohlkammer an die Außenabmessungen des Schaltelementes angepaßt werden.

Das Schaltelement wird vorteilhaft vor dem Einbau in die Vorrichtung vorgefertigt, so daß die einzelnen Kontaktelemente und der Abstandhalter einen vorgegebenen seitlichen Abstand zueinander aufweisen und nicht gesondert positioniert und fixiert werden müssen. Hierdurch kann keine Verschiebung der einzelnen Kontaktelemente und des Abstandhalters zueinander erfolgen, so daß ein sicheres Funktionsverhalten der Vorrichtung gewährleistet ist.

Die durch die Vorfertigung des Schaltelementes vor dem Einbau vorgegebenen festen seitlichen Abstände der einzelnen Elemente des Schaltelementes zueinander erlauben darüber hinaus, bei Bedarf, eine besonders kompakte Bauweise der gesamten Vorrichtung. Die exakte Positionierbarkeit der aktiven Bereiche des Schaltelementes bezüglich der Kraftübertrager und des innen liegenden Abstandhalters bezüglich der Anlauffläche des Schließelementes ermöglichen in der Tat eine Reduzierung ihrer jeweiligen seitlichen Abmessungen auf ein funktionell bedingtes Mindestmaß. Im Gegensatz hierzu müssen die einzelnen Kontaktleisten und der Abstandhalter beim Stand der Technik eine größere seitliche Abmessung aufweisen um Ungenauigkeiten in der Positionierung der einzelnen Elemente ausgleichen zu können.

In einer ersten bevorzugten Ausgestaltung ist jeweils ein Kontaktelement auf jeder der beiden Trägerfolien derart angeordnet, daß sich die beiden Kontaktelemente gegenüberstehen und beim Zusammendrücken der beiden Trägerfolien in Kontakt gebracht werden. Die beiden Trägerfolien können dabei direkt miteinander in Kontakt gebracht werden oder über eine Schicht aus einem Halbleitermaterial, die zwischen den beiden Kontaktelementen angeordnet ist, wobei der elektrische Widerstand zwischen den beiden Kontaktelementen beim Zusammendrücken der beiden Trägerfolien mit zunehmendem Anpreßdruck abnimmt. In dem ersten Fall bildet das Schaltelement einen einfachen 1/0-Schalter aus, während in dem zweiten Fall ein Foliendrucksensor ausgebildet wird, der ein dem Betrag der auf das Schaltelement ausgeübten Kraft entsprechendes elektrisches Signal liefert.

In einer alternativen Ausgestaltung sind die Kontaktelemente auf einer der beiden Trägerfolien angeordnet während die andere Trägerfolie mit einem elektrisch leitfähigen Material beschichtet ist. Das elektrisch leitende Material kann dabei zum Beispiel eine einfache Metallfolie umfassen oder ein Halbleitermaterial, wobei der elektrische Widerstand zwischen den beiden Kontaktelementen beim Zusammendrücken der beiden Trägerfolien mit zunehmendem Anpreßdruck abnimmt. Auch bei dieser Ausgestaltung wird in dem ersten Fall ein einfacher 1/0-Schalter ausgebildet, während in dem zweiten Fall ein Foliendrucksensor ausgebildet wird, der ein dem Betrag der auf das Schaltelement ausgeübten Kraft entsprechendes elektrisches Signal liefert.

Um eine sichere Auslösung des Schaltelementes zu gewährleisten weist jedes der Kontaktelemente dabei bevorzugt eine längs verlaufende, kammförmige Leiterbahnstruktur auf, wobei die jeweiligen Leiterbahnstrukturen ineinander eingreifen. Bei einem lokal ausgeübten Druck auf die beiden Trägerfolien werden dann die in diesem lokalen Bereich liegenden Kontaktfinger der beiden Kontaktelemente miteinander kontaktiert und das Schaltelement ausgelöst.

In einer vorteilhaften Ausgestaltung sind die beiden aktiven Bereiche elektrisch voneinander isoliert, d.h. daß jeder der aktiven Bereiche zwei Kontaktelemente aufweist, wobei die jeweiligen Kontaktelemente der verschiedenen aktiven Bereiche elektrisch voneinander isoliert sind. Durch gesondertes Auswerten der beiden aktive Bereiche läßt sich mit dieser Vorrichtung bei einer einseitigen Einklemmung feststellen, von welcher Seite her die Einklemmung erfolgt ist, bzw. Auf welcher Seite die größere Einklemmkraft auftritt.

In einer alternativen Ausgestaltung sind die jeweiligen Kontaktelemente des ersten aktiven Bereiches mit den jeweiligen Kontaktelementen des zweiten aktiven Bereiches elektrisch leitend verbunden. Bei einem solchen Schaltelement wird ein Signal erzeugt, das unabhängig von der jeweiligen Einklemmseite ist. Der Vorteil einer solchen Ausgestaltung liegt in der Zahl der benötigen Anschlüsse für das Schaltelement. Während bei zwei voneinander isolierten aktiven Bereiche vier Anschlüsse notwendig sind um die Vorrichtung mit einer Auswerteelektronik zu verbinden, sind bei der alternativen Ausgestaltung lediglich zwei Anschlüsse vorzusehen, wodurch der Einbau einer derartigen Vorrichtung z.B. in ein Kraftfahrzeug wesentlich vereinfacht wird.

In einer ersten solchen Ausgestaltung umfaßt jedes Kontaktelement mehrere in Längsrichtung beabstandete Kontaktfinger, die sich quer zu der Längsrichtung des Schaltelementes über die beiden aktiven Bereiche erstrecken und die jeweils durch einen längs verlaufenden Kontaktstreifen elektrisch miteinander verbunden sind, wobei die Kontaktfinger der beiden Kontaktelemente in Längsrichtung alternierend angeordnet sind Dabei können die längs verlaufenden Kontaktstreifen z.B. unterhalb den seitlichen Abstandhaltern angeordnet sein.

In einer alternativen Ausgestaltung sind in jedem der aktiven Bereiche jeweils zwei Kontaktelemente angeordnet, die an einem Ende des Schaltelementes mit dem entsprechenden Kontaktelement des jeweils anderen aktiven Bereiches elektrisch leitend miteinander verbunden sind. Diese Ausführung ist besonders beim Einsatz einer Diode zwischen den Kontaktelementen zur Funktionsüberprüfung von besonderem Vorteil, da die Anschlüsse des Schaltelementes und die Diode an dem gleichen Ende des Schaltelementes angeordnet sind. Dadurch kann das Schaltelement komplett mit Diode vorgefertigt werden, wobei das den Anschlüssen entgegengesetzte Ende des Schaltelementes (an dem die Kontaktelemente der beiden aktiven Bereiche miteinander verbunden sind) immer eine minimale Bauhöhe aufweist und somit leicht in die Hohlkammer eines Hohlprofiles eingefädelt werden kann.

Im folgenden wird nun eine Ausgestaltung der Erfindung anhand der beiliegenden Figuren beschrieben. Es zeigen:
- Fig.1:: einen Querschnitt durch eine in ein Fensterführungsprofil eingebaute Vorrichtung zur Einklemmerkennung bei einem elektrisch betätigten Seitenfenster in einem Fahrzeug,
- Fig.2:: eine erste vorteilhafte Ausgestaltung eines Schaltelementes für eine Vorrichtung zur Einklemmerkennung,
- Fig.3:: eine zweite vorteilhafte Ausgestaltung eines Schaltelementes für eine Vorrichtung zur Einklemmerkennung,
- Fig.4:: eine dritte vorteilhafte Ausgestaltung eines Schaltelementes für eine Vorrichtung zur Einklemmerkennung.

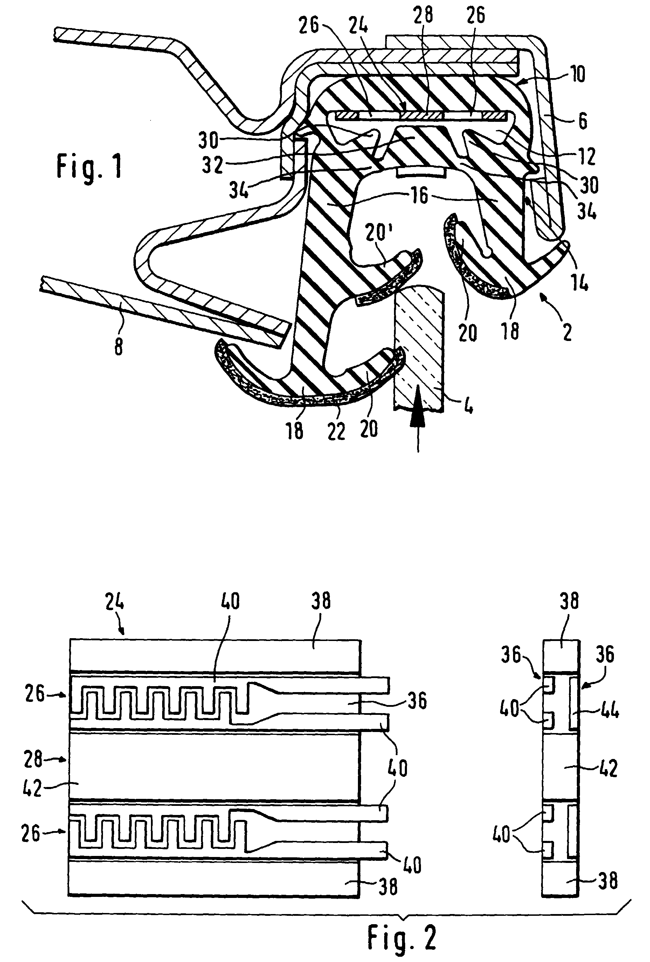

Die in Fig. 1 dargestellte Vorrichtung zur Einklemmerkennung ist als Dichtungsprofil 2 für eine Seitenscheibe 4 eines Kraftfahrzeuges ausgebildet und in einem profilierten Scheibenrahmen 6 in einer Fahrzeugtür 8 angeordnet. Das Dichtungsprofil 2 umfaßt im wesentlichen ein Hohlprofil 10 aus elastischem Material mit einer Hohlkammer 12, das geschützt in einer Einbuchtung 14 des Rahmens 6 angeordnet ist, und zwei sich auf beiden Seiten der Seitenscheibe 4 erstreckende Schenke 16, welche die Scheibe 4 beim Schließen führen und abdichten. Die freien Enden 18 der beiden Schenke 16 weisen dazu auf der der Scheibe 4 zugewandten Seite jeweils eine flexible Dichtlippe 20 auf, die sich beim Schließen der Seitenscheibe 4 dichtend an die Scheibe 4 anlegen. Um eine Geräuschentwicklung beim Entlanggleiten der Seitenscheibe 4 zu vermeiden, sind die Dichtlippen 20 dabei an ihrer der Scheibe 4 zugewandten Seite mit einer Beflockung 22 versehen. Es ist anzumerken, daß die beiden Schenke 16 des U-Profiles symmetrisch ausgebildet sein können, oder wie in Fig. 1 dargestellt, unterschiedliche Längen und Ausgestaltungen aufweisen, um sich einem unsymmetrischen Fensterführungsprofil 6 anzupassen. In dem zweiten Fall kann an dem längeren Schenkel eine zusätzliche Dichtlippe 20' vorgesehen sein, die in der Höhe der Dichtlippe 20 des kürzeren Schenkels 16 angeordnet ist.

Die Schenkel 16 des U-förmigen Hohlprofiles 10 sind bevorzugt als Kraftübertrager ausgebildet, die im Fall einer Einklemmung eines Gegenstandes zwischen den freien Enden 18 der Schenke 16 und der Vorderkante der Scheibe 4, eine Einklemmkraft auf ein in der Hohlkammer 12 des Hohlprofiles 10 angeordnetes Schaltelement 24 in Folienbauweise übertragen. Das Schaltelement 24 erzeugt in diesem Fall ein elektrisches Signal, das von einer angeschlossenen Auswerteelektronik (nicht dargestellt) zur Steuerung Antriebsmotors der Fensterscheibe 4 weiterverarbeitet wird.

Das Schaltelement 24 umfaßt bevorzugt zwei aktive Bereiche 26, die in den unmittelbaren Wirkungsbereichen der Schenke 16 angeordnet sind und die durch einen dazwischenliegenden inaktiven Bereich 28 getrennt sind. Um ein präzises Auslösen des Schaltelementes 24 bereits bei kleinen Einklemmkräften zu gewährleisten, weist jeder Schenke 16 bevorzugt eine in die Hohlkammer 12 hineinragende Schaltnase 30 auf, die zum Auslösen des Schaltelementes 24 einen lokalen Druck auf den ihr zugeordneten aktiven Bereich 28 des Schaltelementes 24 ausübt.

Zwischen den Schaltnasen 30 der Schenke 16 weist das Hohlprofil 10 vorteilhaft eine flach ausgebildete Pufferzone 32 auf, die beim Anlaufen der Fensterscheibe 4 gegen den Profilgrund auf dem inaktiven Bereich 28 des Schaltelementes 24 zur Anlage kommt. Die Fensterscheibe 4 kann folglich dichtend an den Profilgrund angepreßt werden, ohne daß das Schaltelement 24 ausgelöst wird. Um eine sichere Auslösung des Schaltelementes 24 bereits bei kleinen Einklemmkräften zu gewährleisten, ist die Pufferzone 30 dabei bevorzugt durch Sollbiege- oder Sollknickbereiche 34 mechanisch von den Schenkeln 16 entkoppelt.

Das Schaltelement 24 ist in Folienbauweise ausgeführt und wird vorteilhaft vor den Einbau in das Hohlprofil 10 vorgefertigt. Ein derartiges Schaltelement 24 ist in Fig. 2 in einer Draufsicht und in einem Querschnitt dargestellt. Es umfaßt zwei Trägerfolien 36, die bevorzugt mittels seitlichen Abstandhaltern 38 in einem bestimmten Abstand übereinander angeordnet sind. Die Abstandhalter erstrecken sich dabei entlang der Längsseiten der Trägerfolien 36. Auf den Trägerfolien 36 sind Kontaktelemente 40 derart angeordnet, daß zwei aktive Bereiche 26 ausgebildet sind, die durch einen inaktiven Bereich 28 voneinander getrennt sind. In dem inaktiven Bereich 28 des Schaltelementes 24 ist dabei vorteilhaft ein weiterer Abstandhalter 42 zwischen die Trägerfolien 36 eingeklebt, so daß diese beim Auflaufen der Fensterscheibe 4 gegen den Profilgrund nicht zusammengedrückt werden und die aktive Bereiche 26 ausgelöst werden.

In der in Fig. 2 dargestellten Ausführungsform des Schaltelementes 24 sind die Kontaktelemente 40 auf einer der beiden Trägerfolien 36 aufgebracht, während die andere Trägerfolie 36 mit einem elektrisch leitenden Material 44 beschichtet ist. Die beiden Kontaktelemente 40 sind dabei als kammartige Leiterbahnstrukturen ausgebildet, wobei die jeweiligen Leiterbahnstrukturen ineinander eingreifen. Werden die beiden Trägerfolien 36 in dem aktiver Bereich 26 zusammengedrückt, so werden die beiden in diesem aktiver Bereich 26 angeordneten Kontaktelemente 40 miteinander kontaktiert und das Schaltelement 24 wird ausgelöst.

Das elektrisch leitende Material 44 kann zum Beispiel eine einfache Metallfolie umfassen oder ein Halbleitermaterial, wobei der elektrische Widerstand zwischen den beiden Kontaktelementen beim Zusammendrücken der beiden Trägerfolien 36 mit zunehmendem Anpreßdruck abnimmt. In dem ersten Fall wird durch das Schaltelement 24 ein einfacher 1/0-Schalter ausgebildet, während in dem zweiten Fall ein Foliendrucksensor ausgebildet wird, der ein dem Betrag der auf das Schaltelement ausgeübten Kraft entsprechendes elektrisches Signal liefert. Derartige Foliendrucksensoren sind zum Beispiel unter dem Namen "Force Sensing Resistor" bekannt.

Es ist anzumerken, daß in einer alternativen Ausgestaltung jeweils ein Kontaktelement 40 auf jeder der beiden Trägerfolien 36 derart angeordnet sein kann, daß sich die beiden Kontaktelemente 40 gegenüberstehen und beim Zusammendrücken der beiden Trägerfolien 36in Kontakt gebracht werden. Die beiden Trägerfolien können dabei direkt miteinander in Kontakt gebracht werden oder über eine Schicht aus einem Halbleitermaterial, die zwischen den beiden Kontaktelementen angeordnet ist, wobei der elektrische Widerstand zwischen den beiden Kontaktelementen beim Zusammendrücken der beiden Trägerfolien 36 mit zunehmendem Anpreßdruck abnimmt. Auch hier bildet das Schaltelement 24 in dem ersten Fall einen einfachen 1/0-Schalter aus bildet, während in dem zweiten Fall ein Foliendrucksensor ausgebildet wird, der ein dem Betrag der auf das Schaltelement 24 ausgeübten Kraft entsprechendes elektrisches Signal liefert.

Das in Fig. 2 dargestellte Schaltelement 24 weist in jeden aktiven Bereich 26 zwei Kontaktelemente 40 auf, die von den Kontaktelementen 40 des jeweils anderen aktiven Bereiches 26 elektrisch isoliert sind, d.h. die beiden aktiven Bereiche 26 sind elektrisch voneinander isoliert. Durch gesondertes Auswerten der beiden aktive Bereiche 26 läßt sich mit dieser Vorrichtung bei einer einseitigen Einklemmung feststellen, von welcher Seite her die Einklemmung erfolgt ist, bzw. auf welcher Seite die größere Einklemmkraft auftritt. Allerdings werden bei dieser Ausgestaltung vier Anschlüsse benötigt, um das Schaltelement 24 mit der Auswerteelektronik zu verbinden.

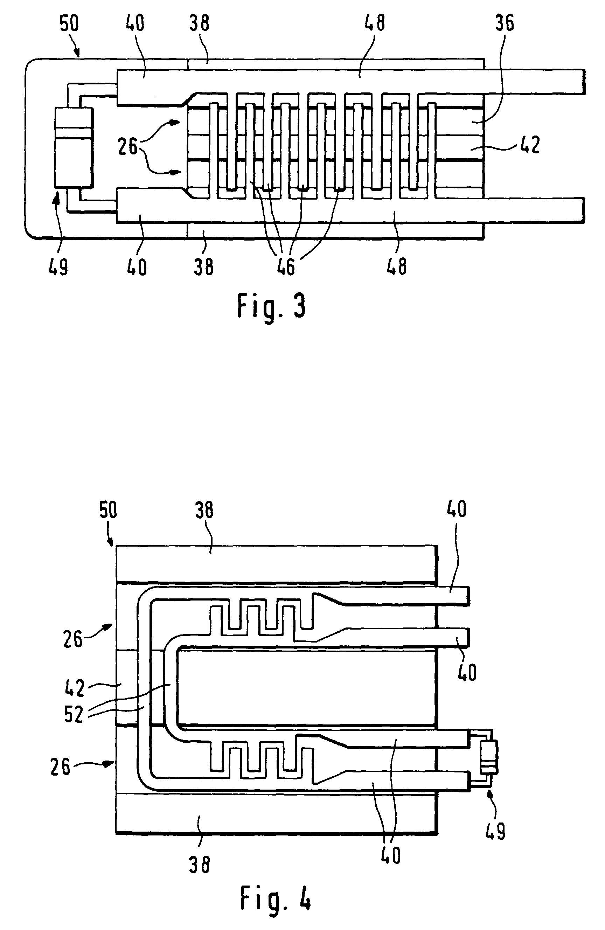

Bei den in den Fig. 3 und 4 dargestellten Ausführungsformen des Schaltelementes 24 sind die beiden aktiven Bereiche hingegen elektrisch elend verbunden, wodurch sich die Zahl der benötigten Anschlüsse auf zwei reduziert. Bei einem solchen Schaltelement wird ein Signal erzeugt, das unabhängig von der jeweiligen Einklemmseite ist.

In Fig. 3 umfaßt dazu jedes Kontaktelement 40 mehrere in Längsrichtung beabstandete, sich quer über die beiden aktiven Bereiche 26 erstreckende Kontaktfinger 46, die durch einen längs verlaufenden Kontaktstreifen 48 elektrisch miteinander verbunden sind. Die Kontaktfinger 46 der beiden Kontaktelemente 40 sind dabei in Längsrichtung alternierend angeordnet, so daß beim Zusammendrücken der beiden Trägerfolien 36 mindestens zwei Kontaktfinger 46 der beiden Kontaktelemente 40 miteinander kontaktiert gebracht werden. Es ist anzumerken, daß die einzelnen quer verlaufenden Kontaktfinger 46 sich ebenfalls über den inaktiven Bereich 28 des Schaltelementes 24 erstrecken. Da die Kontaktfinger 46 in diesem Bereich jedoch von dem mittleren Abstandhalter 42 überdeckt sind, kann es hier nicht zu einer Auslösung des Schaltelementes 24 kommen. Weiterhin können die längs verlaufenden Kontaktstreifen 48 unterhalb der seitlichen Abstandhalter 38 angeordnet sein, was eine besonders kompakte Bauweise des Schaltelementes 24 ermöglicht.

Zur Überprüfung des Schaltelementes 24 ist in dem in Fig. 3 dargestellten Schaltelement 24 eine Diode 49 zwischen die beiden Kontaktstreifen 48 geschaltet, wobei die Diode 49 an dem den Anschlüssen entgegengesetzten Ende 50 des Schaltelementes 24 angeordnet ist. Anhand einer an die Anschlüsse angelegten, umpolbaren Prüfspannung kann mit dieser Diode 49 die Integrität des Schaltelementes 24 überprüft werden. Ist die Diode 49 z.B. leitend geschaltet, so kann der Gesamtwiderstand der Kontaktstreifen 48 gemessen und auf eventuelle Störungen analysiert werden. Bei gesperrter Diode läßt sich der Gesamtwiderstand zwischen den beiden Kontaktelementen 40 bei nicht belastetem Schaltelement 24 messen. Diese Überprüfungen können zum Beispiel automatisch von der angeschlossenen Auswerteelektronik periodisch durchgeführt werden, so daß Störungen des Schaltelementes 24 frühzeitig erkannt und dem Fahrer durch eine Kontrolleuchte angezeigt werden können.

Die Fig. 4 zeigt eine weitere Ausgestaltung eines Schaltelementes 24 mit zusammengeschalteten aktiven Bereichen 26. In jedem der aktiven Bereiche 26 sind jeweils zwei Kontaktelemente 40 angeordnet, die an einem Ende 50 des Schaltelementes 24 durch Leiterbahnen 52 mit dem entsprechenden Kontaktelement 40 des jeweils anderen aktiven Bereiches 26 elektrisch leitend miteinander verbunden sind. Diese Ausführung ist besonders beim Einsatz einer Diode 49 zwischen den Kontaktelementen zur Funktionsüberprüfung von besonderem Vorteil, da die Anschlüsse des Schaltelementes 24 und die Diode 49 an dem gleichen Ende des Schaltelementes 24 angeordnet sind. Dadurch kann das Schaltelement komplett mit Diode 49 vorgefertigt werden, wobei das den Anschlüssen entgegengesetzte Ende 50 des Schaltelementes 24 immer eine minimale Bauhöhe aufweist und somit leicht in die Hohlkammer 12 des Hohlprofiles 10 eingefädelt werden kann.

## Patentansprüche

1. Vorrichtung zur Einklemmerkennung bei einem kraftbetätigten Schließelement (4), mit einem Schaltelement (24) das entlang einer ersten Schließkante angeordnet ist und mit mindestens zwei sich längs erstreckenden Kraftübertragern (16), die das Schließelement (4) in Schließstellung seitlich flankieren und die im Einklemmfall eine Einklemmkraft auf das Schaltelement (24) übertragen, **dadurch gekennzeichnet, daß** das Schaltelement (24) als Schaltelement in Folienbauweise ausgebildet ist mit zwei Trägerfolien (36), die in einem bestimmten Abstand übereinander angeordnet sind, und daß mindestens zwei Kontaktelemente (40) auf den Trägerfolien (36) derart angeordnet sind, daß zwei längs verlaufende aktive Bereiche (26) ausgebildet werden die durch einen längs verlaufenden Abstandhalter (42) voneinander getrennt sind, wobei jeder aktive Bereich (26) in dem Wirkungsbereich jeweils eines Kraftübertragers (16) angeordnet ist.

2. Vorrichtung nach Anspruch 1, dadurch gekennzeichnet, daß jeweils ein Kontaktelement (40) auf jeder der beiden Trägerfolien (36) derart angeordnet ist, daß sich die beiden Kontaktelemente (40) gegenüberstehen und beim Zusammendrücken der beiden Trägerfolien (36) in Kontakt gebracht werden.

3. Vorrichtung nach Anspruch 2, dadurch gekennzeichnet, daß zwischen den beiden Kontaktelementen (40) eine Schicht aus einem Halbleitermaterial (44) angeordnet ist, über die die beiden Kontaktelemente (40) und beim Zusammendrücken der beiden Trägerfolien (36) in Kontakt gebracht werden, wobei der elektrische Widerstand zwischen den beiden Kontaktelementen (40) beim Zusammendrücken der beiden Trägerfolien (36) mit zunehmendem Anpreßdruck abnimmt.

4. Vorrichtung nach Anspruch 1, dadurch gekennzeichnet, daß die Kontaktelemente (40) auf einer ersten Trägerfolie (36) angeordnet sind und daß die zweite Trägerfolie (36) mit einem elektrisch leitfähigen Material (44) beschichtet ist.

5. Vorrichtung nach Anspruch 4, dadurch gekennzeichnet, daß das elektrisch leitfähige Material (44) ein Halbleitermaterial umfaßt, wobei der elektrische Widerstand zwischen den beiden Kontaktelementen (40) beim Zusammendrücken der beiden Trägerfolien (36) mit zunehmendem Anpreßdruck abnimmt.

6. Vorrichtung nach einem der Ansprüche 4 oder 5, dadurch gekennzeichnet, daß jedes der Kontaktelemente (40) eine kammförmige Leiterbahnstruktur aufweist, wobei die jeweiligen Leiterbahnstrukturen ineinander eingreifen.

7. Vorrichtung nach einem der Ansprüche 1 bis 6, dadurch gekennzeichnet, daß die beiden aktiven Bereiche (26) elektrisch voneinander isoliert sind.

8. Vorrichtung nach einem der Ansprüche 1 bis 6, dadurch gekennzeichnet, daß die jeweiligen Kontaktelemente (40) des ersten aktiven Bereiches (26) mit den Kontaktelementen (40) des zweiten aktiven Bereiches (26) elektrisch leitend verbunden sind.

9. Vorrichtung nach Anspruch 8, dadurch gekennzeichnet, daß jedes Kontaktelement (40) mehrere in Längsrichtung beabstandete Kontaktfinger (46) umfaßt, die sich quer zu der Längsrichtung des Schaltelementes (24) über die beiden aktiven Bereiche (26) erstrecken und die jeweils durch einen längs verlaufenden Kontaktstreifen (48) elektrisch miteinander verbunden sind, und daß die Kontaktfinger (46) der beiden Kontaktelemente (40) in Längsrichtung alternierend angeordnet sind.

10. Vorrichtung nach Anspruch 8, dadurch gekennzeichnet, daß in jedem der aktiven Bereiche (26) jeweils zwei Kontaktelemente (40) angeordnet sind, die an einem Ende (50) des Schaltelementes (24) mit dem entsprechenden Kontaktelement (40) des jeweils anderen aktiven Bereiches (26) elektrisch leitend miteinander verbunden sind.

11. Vorrichtung nach einem der vorhergehenden Ansprüche, dadurch gekennzeichnet, daß die Kontaktelemente (40) mittels eines Siebdruckverfahrens auf die jeweilige Trägerfolie (36) aufgebracht werden.

12. Vorrichtung nach einem der vorhergehenden Ansprüche, dadurch gekennzeichnet, daß die Trägerfolien (36) mittels seitlichen Abstandhaltern zusammen verklebt sind, wobei sich die Abstandhalter entlang der Längsseiten der Trägerfolien (36) erstrecken.

13. Vorrichtung nach einem der vorhergehenden Ansprüche, dadurch gekennzeichnet, daß das Schaltelement (24) in einem U-förmigen Hohlkammerprofil (10) angeordnet ist, wobei die Schenke des U-förmigen Hohlkammerprofils (10) als Kraftübertrager (16) ausgebildet sind.
